## Europäisches Patentamt

## European Patent Office

## Office européen des brevets

(19)

(11) Veröffentlichungsnummer: **0 135 681**
**B1**

(12) **EUROPÄISCHE PATENTSCHRIFT**

(45) Veröffentlichungstag der Patentschrift:
**16.09.87**

(21) Anmeldenummer: **84107309.1**

(22) Anmeldetag: **26.06.84**

(51) Int. Cl.⁴: **H 01 B 17/64,** H 01 G 4/20,
B 32 B 27/06

(54) **Mehrlagige Elektroisolierfolie.**

(30) Priorität: **05.07.83 DE 3324219**

(43) Veröffentlichungstag der Anmeldung:
**03.04.85 Patentblatt 85/14**

(45) Bekanntmachung des Hinweises auf die Patenterteilung:
**16.09.87 Patentblatt 87/38**

(84) Benannte Vertragsstaaten:
**DE FR GB IT**

(56) Entgegenhaltungen:
**EP - A - 0 130 113**
**CH - A - 415 777**
**US - A - 1 702 993**
**US - A - 3 088 995**

(73) Patentinhaber: **HOECHST AKTIENGESELLSCHAFT,**
**Postfach 80 03 20, D-6230 Frankfurt am Main 80 (DE)**

(72) Erfinder: **Bergmann, Rolf, Erich-Ollenhauer-Strasse 32f,**
**D-6200 Wiesbaden (DE)**
Erfinder: **Crass, Günther, Bachstrasse 7,**
**D-6204 Taunusstein 4 (DE)**
Erfinder: **Helf, Karl-Eduard, Weischstrasse 24,**
**D-6200 Wiesbaden (DE)**

ACTORUM AG

**Beschreibung**

Die vorliegende Erfindung betrifft eine Mehrschichtfolie aus thermoplastischem Polymer, die für den Einsatz als Elektroisoliermaterial geeignet ist.

Es wurde bereits ein mehrschichtiges Isoliermaterial beschrieben, welches aus zwei äusseren Isolierschichten und einer leitfähigen Zwischenschicht aufgebaut ist (US-A-1 702 993). Nach diesem aus dem Jahre 1929 stammenden Vorschlag bestehen die Isolierschichten aus Papier und die leitfähige Zwischenschicht aus einer dünnen Metallfolie, einem Draht oder Kohlenstoffteilchen, welche zwischen den beiden Papierschichten fein verteilt sind.

Inzwischen gehört der Einsatz von Folien aus Kunststoff als Elektroisoliermaterial seit langem zum Stand der Technik. Die Folien dienen dabei sowohl als Kabelisolierungen als auch als Dielektrikum in Kondensatoren oder aber als Trägerfolien für selbstklebende Isolierbänder. Auch die Grenzen des Einsatzes solcher Folien sind bereits bekannt. So wurde beobachtet, dass beim Anlegen von hohen Wechselspannungen an Kondensatoren mit einem Dielektrikum aus thermoplastischen Polymeren Glimmentladungen auftreten, die zur Zerstörung des Dielektrikums führen und damit den Kondensator unbrauchbar machen. Diese Glimmentladungen entstehen vor allem an solchen Stellen, wo zwischen dem Schichtaufbau, bestehend abwechselnd aus Elektroden und Dielektrikum, kleinste Einschlüsse von Gasen bestehen, welche durch das angelegte elektrische Feld ionisiert werden und in diesem Zustand die Dielektrikumsfolie angreifen können. Dieser Angriff ist vergleichbar mit einer Coronabehandlung von Plastikfolien.

Um die Glimmentladungen zu vermeiden, ist man dazu übergegangen, die Kondensatoren mit Inertgasen zu fluten oder sie mit Imprägnierflüssigkeiten zu tränken. Als Inertgas wird z.B. SF$_6$ verwendet, welches sich nicht oder nur sehr schwer ionisieren lässt, und als Imprägnierflüssigkeiten kommen Mineralöl zum Einsatz oder Verbindungen wie Trichlorbiphenyl, bekannt als Clophen, Diethylhexylphthalat, Phenylxylylethan, Benzylneocaprat oder Isopropylbiphenyl. Derartige Imprägnierflüssigkeiten können auch für die Isolierungen von Hochspannungskabeln verwendet werden. Eine Folie, die geeignet ist, mit derartigen Imprägnierflüssigkeiten getränkt zu werden, beschreibt die DE-A-2 942 298. Die genannten Imprägnierflüssigkeiten sind aber teuer, und ihr Einsatz ist umständlich, so dass es nicht an Versuchen gefehlt hat, Methoden zu finden, die diese Nachteile beseitigen.

Aus der VDE-Bestimmung 0303, Teil 7, ist bekannt, dass die Glimmeinsatzspannung (U$_{GE}$), die zur Zerstörung des Dielektrikums führt, sich aus einer Formel berechnen lässt:

$$U_{GE} = K \cdot \sqrt{\frac{a}{\varepsilon}} \ .$$

Hierin bedeuten:

K: eine Konstante, die abhängig ist von den zur Messung verwendeten Elektrodendimensionen

a: die Schichtdicke der Folie

ε: die Dielektrizitätskonstante der Folie

Um eine Erhöhung der Glimmeinsatzspannung zu bewirken, gibt es demnach zwei Möglichkeiten, nämlich Verringerung der Dielektrizitätskonstante oder Erhöhung der Schichtdicke.

Eine Verringerung der Dielektrizitätskonstante ist allerdings speziell im Hinblick auf die Verwendung der Folie als Dielektrikum für Kondensatoren nicht anzustreben, weil dadurch zu grosse Kapazitätsverluste hingenommen werden müssten. Die DE-A-3 242 657 beschreibt z.B. Folien mit besonders hoher Dielektrizitätskonstante zur Vergrösserung der Kapazität von Kondensatoren. Diese Folien neigen aber besonders stark zu Glimmentladungen, wodurch die damit hergestellten Kondensatoren für den Einsatz bei hohen Wechselspannungen ungeeignet sind.

Eine Erhöhung der Schichtdicke ist ebenfalls nicht in unbegrenztem Umfang anzustreben, weil dadurch die Abmessungen der damit hergestellten Kondensatoren vergrössert werden, was ebenfalls nicht wünschenswert ist.

Aufgabe der vorliegenden Erfindung ist es, eine Folie aus thermoplastischen Polymeren zu schaffen, die als Elektroisoliermaterial beim Einsatz hoher Wechselspannungen geeignet ist und die dabei nicht durch Glimmentladungen beschädigt wird.

Gelöst wird diese Aufgabe durch die Mehrschichtfolie mit den im Anspruch 1 genannten Merkmalen und durch den Kondensator nach Anspruch 9. Die abhängigen Ansprüche 2 bis 8 geben besondere Ausbildungen der Mehrschichtfolie an.

Als Mehrschichtfolie soll im Sinne der Erfindung eine Folie verstanden werden, die mindestens drei thermoplastische Polymerschichten umfasst, wobei die mittlere Schicht diejenige Schicht sein soll, welche befähigt ist, den elektrischen Strom zu leiten. Bevorzugt beträgt die Anzahl der Schichten 3 bis 9, wobei die Schichten so angeordnet sein sollen, dass jeweils auf eine den elektrischen Strom leitende Polymerschicht eine den elektrischen Strom nicht leitende Polymerschicht folgen soll oder umgekehrt, wobei ferner die äussersten Polymerschichten der gesamten Mehrschichtfolie durch solche Schichten gebildet sein sollen, die den elektrischen Strom nicht leiten.

Beispiele für thermoplastische Polymere, wie sie erfindungsgemäss für die den elektrischen Strom nicht leitenden Schichten Verwendung finden, sind Polyethylen, Polypropylen, Polyethylenterephthalat, Polybutylenterephthalat, Polyethylennaphthalat, Polycarbonat, Plyacrylat, Polysulfone, Polyamide, Polyimide, Polyvinylchlorid, Polyvinylalkohol sowie Mischungen und Co- und Blockpolymere von diesen. Auch andere thermoplastische Polymere sind geeignet, wobei Polymere mit einer Schmelzviskosität im Bereich von 100 bis 10000 mPa·s bevorzugt werden.

Von allen thermoplastischen Polymeren sind besonders bevorzugt Polypropylen und Polyethylenterephthalat, weil diese besonders vorteilhafte elektrische Eigenschaften besitzen, und weil sie sich besonders leicht verarbeiten lassen.

Die den elektrischen Strom leitenden Schichten sind ebenfalls aus den genannten Polymeren aufgebaut, bevorzugt ebenfalls aus Polypropylen oder Polyethylenterephthalat, wobei diese Schichten zusätzlich mit einem die elektrische Leitfähigkeit erhöhenden Mittel modifiziert sind. Derartige Mittel können sein Russ oder Metalle, wie z.B. Aluminium oder Zink, bevorzugt von diesen wird Russ verwendet.

Die Menge, in der die Mittel dem die Schichtmatrix bildenden Polymeren zugegeben werden, liegt im Bereich von 3 bis 50 Gew.-%, bezogen auf das Gesamtgewicht der den elektrischen Strom leitenden Schicht, bevorzugt liegt sie zwischen 5 und 20 Gew.-%.

Als Massnahme zum Einbringen der vorerwähnten, die Leitfähigkeit der den elektrischen Strom leitenden Schicht verbessernden Mittel in die die Schicht bildenden thermoplastischen Polymeren wird die Methode verwendet, bei der die Mittel zu kleinen Teilchen vom Durchmesser von 0,01 bis 3 µm pulverisiert werden, diese Teilchen dann mit dem betreffenden thermoplastischen Polymeren vermischt und aus der Mischung dann durch Schmelzextrusion die Folie geformt wird. Das Vermischen der Teilchen mit den Polymeren kann durchgeführt werden, indem die Teilchen zu den thermoplastischen Polymeren zugegeben werden, während das thermoplastische Polymere polymerisiert wird, oder, indem die Teilchen direkt mittels eines Extruders oder einer Kalanderwalze abgemischt werden. Die Art des Vermischens ist aber nicht der eigentliche Gegenstand der Erfindung.

Die Bildung der Mehrschichtfolie kann in üblicher Weise erfolgen. Beispielsweise können die thermoplastischen Schmelzen in Extrudern geschmolzen, die Polymerschmelzen dann durch eine Breitschlitz- oder Ringdüse extrudiert und das extrudierte Polymere zur Verfestigung, unter Erhalt einer Folie, abgekühlt werden. Bevorzugt wird hierbei das Verfahren der Coextrusion angewendet, bei dem die die einzelnen Schichten der Mehrschichtfolie bildenden Polymeren vor der Extrusion aus der Düse zusammengefügt und dann gemeinsam aus der Düse extrudiert und abgekühlt werden. Dieses Verfahren bietet den Vorteil, dass jeglicher Lufteinschluss zwischen den einzelnen Schichten der Mehrschichtfolie ausgeschlossen werden kann. Es können aber auch andere Verfahren zur Herstellung der Mehrschichtfolie angewendet werden, wie Extrusionslaminierung, Trockenlaminierung, Lösungslaminierung oder Heissschmelzbeschichtung.

Die durch diese Verfahren hergestellte Vorfolie wird vorzugsweise anschliessend unter den üblichen Bedingungen verstreckt, wobei sich die Molekülketten in bestimmte Vorzugsrichtungen orientieren. Die Folie wird hierbei auf Temperaturen von (tg ± 10 °C) erwärmt und bei dieser Temperatur verstreckt. Die Verstreckung kann nur in einer Richtung erfolgen, oder sie kann biaxial vorgenommen werden, wobei es keinen Unterschied macht, ob sie stufenweise oder in einem Schritt durchgeführt wird. Bevorzugt wird die Folie stufenweise biaxial verstreckt und gegebenenfalls daran anschliessend hitzefixiert. Die Streckverhältnisse sind dabei abhängig von der Art der verwendeten Polymeren, sie liegen im wesentlichen in dem aus dem Stand der Technik bekannten Rahmen.

Die Dicke der so hergestellten Mehrschichtfolie beträgt 3 bis 50 µm, bevorzugt 6 bis 25 µm. Die Dicke der den elektrischen Strom leitenden Polymerschichten ist dabei bevorzugt kleiner als die Dicke der den elektrischen Strom nicht leitenden Polymerschichten, sie kann aber auch genauso gross oder grösser sein. Vorzugsweise liegt die Dicke der den elektrischen Strom nicht leitenden Polymerschichten im Bereich zwischen 1 und 10 µm, besonders bevorzugt zwischen 2 und 7 µm. Die Dicke der den elektrischen Strom leitenden Polymerschicht liegt im Bereich zwischen 0,1 und 5 µm. Falls als Modifizierungsmittel zur Erhöhung der elektrischen Leitfähigkeit Metalle verwendet werden, die im Vakuum aufgedampft werden, kann die Schichtdicke der den elektrischen Strom leitenden Schicht bis 0,01 µm gesenkt werden.

Der elektrische Widerstand der den elektrischen Strom leitenden Polymerschicht beträgt maximal $\leqq 10^5$ Ohm, vorzugsweise 1 bis $\leqq 10^3$ Ohm. Gemessen wird dieser Widerstand nach DIN 53482/ VDE 0303 Teil 3.

Die nachfolgenden Figuren und deren Beschreibung dienen dazu, die vorliegende Erfindung noch anschaulicher darzustellen.

Fig. 1 zeigt im Querschitt eine Kondensatoranordnung mit einer dreischichtigen Folie als Dielektrikum;

Fig. 2 zeigt einen Schnitt durch eine dreischichtige Folie gemäss der Erfindung.

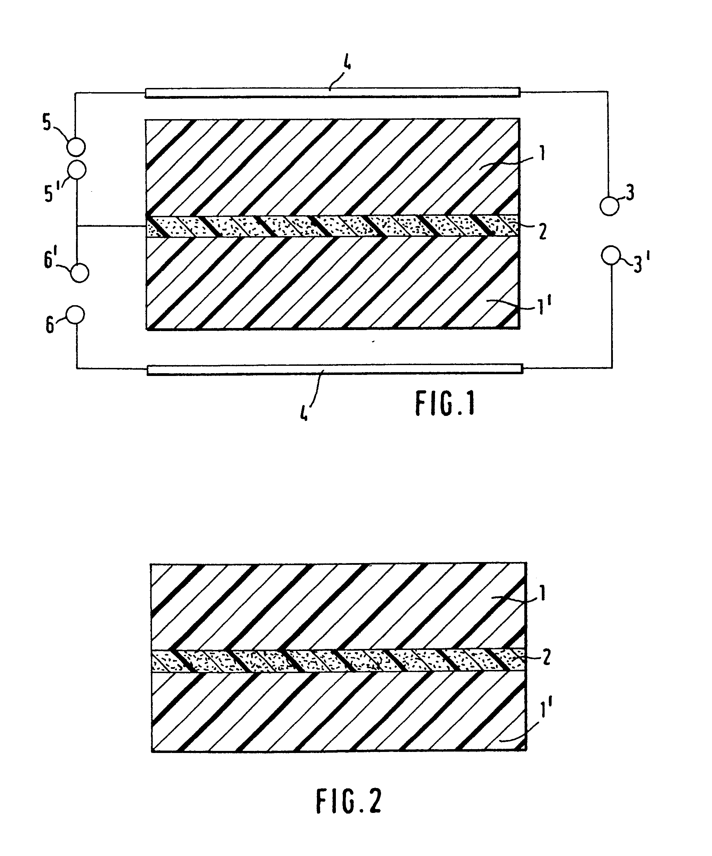

In Fig. 1 sind die den elektrischen Strom nicht leitenden Polymerschichten 1 und 1' zu erkennen, zwischen denen die den elektrischen Strom leitende Polymerschicht 2 angeordnet ist, welche eine deutlich geringere Schichtdicke aufweist. Zwischen den Punkten 3 und 3' liegt die Spannung an, welche bevorzugt eine Wechselspannung ist und die sich auf die Kondensatorelektroden 4 überträgt. Zur Verdeutlichung des Grundgedankens der Erfindung sind in der Zeichnung die an der den elektrischen Strom leitenden Schicht anliegenden Teilspannungen herausgegriffen. Zwischen den Punkten 5 und 5' bzw. 6 und 6' liegt jeweils die Hälfte der Gesamtspannung an, die an den Punkten 3 und 3' gemessen wird. Der Kondensator gemäss der Erfindung zeichnet sich dadurch aus, dass eine wesentlich höhere Gesamtspannung angelegt werden kann, ohne dass Glimmentladungen festzustellen sind, die das Dielektrikum zerstören würden, als dies bei Kondensatoren mit Dielektrikumszwischenschichten nach dem Stand der Technik möglich ist.

Fig. 2 zeigt nochmals den Folienaufbau einer dreischichtigen Folie mit zwei den elektrischen Strom nicht leitenden Polymerschichten 1 und 1'
und der zwischen diesen beiden Schichten angeordneten, den elektrischen Strom leitenden Polymerschicht 2 mit wesentlich geringerer Schichtdicke als die Schichten 1 und 1'.

Beispiel

Es wurden vier Messungen durchgeführt, deren
Ergebnisse in der anschliessenden Tabelle zusammengestellt sind. Bei den Messungen wurden Dielektrikumsfolien mit genau definierten Schichtdikken zwischen zwei als Kondensatorelektroden dienende kreisrunde Platten um einen Durchmesser
von 50 mm gelegt, und die angelegte Spannung
eines Wechselstroms mit der Frequenz 50 Hz wurde so lange erhöht, bis Glimmentladungen zu
beobachten waren.

Tabelle

| | $U_{GE}$ [V] 50 Hz~Strom |
|---|---|
| Polypropylenfolie der Schichtdicke 8 µm, einlagig | 340 |
| Polypropylenfolie der Schichtdicke 8 µm, zweilagig ≙ 16 µm | 430 |
| Polypropylenfolie der Schichtdicke 15 µm, einlagig | 440 |
| Polypropylenfolie der Schichtdicke 8 µm, zweilagig, mit leitfähiger Zwischenschicht (1 µm) ≙ Folie gemäss der Erfindung – | 630 |

Die Mehrschichtfolie der Erfindung ist geeignet
als Elektroisoliermaterial für Kabelummantelungen, besonders aber als Dielektrikum in elektrischen Kondensatoren. Die Folie erwies sich als
besonders verschleissarm, da sie bei hohen
Wechselspannungen nicht durch Glimmentladung beschädigt wird, wie dies bei Isolierfolien
herkömmlicher Art der Fall ist.

Bei der Anwendung der Folie für Kabelisolierungen ist bevorzugt zusätzlich zu der als Isolierschicht dienenden Folie eine als Schutz gegen
mechanische Beschädigung dienende Aussenschicht aus stabilen thermoplastischen Polymeren
aufgebracht.

**Patentansprüche**

1. Mehrschichtfolie auf Basis von thermoplastischem Polymer, geeignet als Elektroisoliermaterial, dadurch gekennzeichnet, dass sie mindestens
drei thermoplastische Polymerschichten umfasst,
wobei zwischen zwei äusseren, den elektrischen
Strom nicht leitenden Polymerschichten eine mittlere Polymerschicht mit erhöhter elektrischer Leitfähigkeit angeordnet ist, welche durch Zusatz von
die elektrische Leitfähigkeit erhöhendem Mittel,
insbesondere Russ, Aluminium oder Zink, einen
reduzierten elektrischen Widerstand, vorzugsweise von 1 bis $10^5$ Ohm, besitzt.

2. Mehrschichtfolie nach Anspruch 1, dadurch
gekennzeichnet, dass die Anzahl der Polymerschichten 3 bis 9 beträgt, wobei Polymerschichten
mit erhöhter elektrischer Leitfähigkeit und den
elektrischen Strom nicht leitende Polymerschichten abwechselnd aufeinander folgen und die äussersten Polymerschichten der Mehrschichtfolie
den elektrischen Strom nicht leiten.

3. Mehrschichtfolie nach Anspruch 1 oder 2,
dadurch gekennzeichnet, dass die den elektrischen Strom nicht leitenden Polymerschichten eine Schmelzviskosität im Bereich zwischen 100
und 10 000 mPa·s aufweisen und bevorzugt aus
Polypropylen oder Polyethylenterephthalat bestehen.

4. Mehrschichtfolie nach einem der Ansprüche 1
bis 3, dadurch gekennzeichnet, dass die Polymerschichten mit erhöhter elektrischer Leitfähigkeit
eine Schmelzviskosität zwischen 100 und 10 000
mPa·s aufweisen und bevorzugt aus Polypropylen
oder Polyethylenterephthalat bestehen.

5. Mehrschichtfolie nach einem der Ansprüche 1
bis 4, dadurch gekennzeichnet, dass die Polymerschichten mit erhöhter elektrischer Leitfähigkeit
mit dem die elektrische Leitfähigkeit erhöhenden
Mittel in einer Menge von 3 bis 50, vorzugsweise
von 5 bis 20 Gew.-%, bezogen auf das Gesamtgewicht der den elektrischen Strom leitenden Polymerschichten, mofidiziert sind.

6. Mehrschichtfolie nach einem der Ansprüche 1
bis 5, dadurch gekennzeichnet, dass die die elektrische Leitfähigkeit erhöhenden Mittel Teilchengrössen im Bereich zwischen 0,01 und 3, bevorzugt zwischen 0,05 und 1,0 µm aufweisen.

7. Mehrschichtfolie nach einem der Ansprüche 1
bis 6, dadurch gekennzeichnet, dass ihre Gesamtdicke 3 bis 50, vorzugsweise 6 bis 25 µm beträgt,
wobei die Dicke der Polymerschichten mit erhöhter elektrischer Leitfähigkeit stets kleiner sind als
die Dicken der den elektrischen Strom nicht leitenden Polymerschichten.

8. Mehrschichtfolie nach einem der Ansprüche 1
bis 7, dadurch gekennzeichnet, dass die Dicken
der den elektrischen Strom nicht leitenden Polymerschichten im Bereich zwischen 1 und 10, bevorzugt zwischen 2 und 7 µm, und die Dicken der
den elektrischen Strom leitenden Polymerschichten zwischen 0,01 und 5, bevorzugt zwischen 0,5
und 3 µm, liegen.

9. Elektrischer Kondensator umfassend eine
Kunststoffolie als Dielektrikum, dadurch gekennzeichnet, dass der Kondensator zur Verbesserung
der Glimmeinsatzspannung als Kunststoffolie die
Mehrschichtfolie nach einem der Ansprüche 1 bis
8 enthält.

Claims

1. Multilayered foil on a basis of a thermoplastic
polymer, suitable as an electro-insulating material, which comprises at least three thermoplastic
polymer layers, with a central polymer layer of
increased electric conductivity being sandwiched
between two outer, electrically non-conductive
polymer layers, said central layer containing an admixture of substances, by which the electric conductivity is increased, in particular carbon black, aluminium or zinc, and thus possessing a reduced electric resistance, preferably of from 1 to $10^5$ ohm.

2. Multilayered foil as claimed in claim 1, wherein the number of polymer layers is 3 to 9 and polymer layers of increased electric conductivity and electrically non-conductive polymer layers are arranged one above another in alternating order and the two cuter polymer layers of the multilayered foil are electrically non-conductive.

3. Multilayered foil as claimed in claim 1 or 2, wherein the electrically non-conductive polymer layers have a melt viscosity of 100 to 10,000 mPa·s and are preferably comprised of polypropylene or polyethylene terephthalate.

4. Multilayered foil as claimed in any of claims 1 to 3, wherein the polymer layers of increased electric conductivity have a melt viscosity of 100 to 10,000 mPa·s and are preferably comprised of polypropylene or polyethylene terephthalate.

5. Multilayered foil as claimed in any of claims 1 to 4, wherein the substance, by which the electric conductivity is increased, is contained in the polymer layers of increased electric conductivity in an amount of 3 to 50% by weight, preferably of 5 to 20% by weight, relative to the total weight of the electrically conductive polymer layers.

6. Multilayered foil as claimed in any of claims 1 to 5, wherein the substances, by which the electric conductivity is increased, have particle sizes in the range of between 0.01 and 3 µm, preferably of between 0.05 and 1.0 µm.

7. Multilayered foil as claimed in any of claims 1 to 6, which has a total thickness of 3 to 50 µm, preferably of 6 to 25 µm, with the thicknesses of the polymer layers of increased electric conductivity being always inferior to the thicknesses of the electrically non-conductive polymer layers.

8. Multilayered foil as claimed in any of claims 1 to 7, wherein the electrically non-conductive polymer layers have thicknesses between 1 and 10 µm, preferably between 2 and 7 µm, and the electrically conductive polymer layers have thicknesses between 0.01 and 5 µm, preferably between 0.5 and 3 µm.

9. Electric capacitor having a plastic foil as the dielectric, wherein said plastics foil contained in the capacitor is the multilayered foil as claimed in any of claims 1 to 8, in order to increase the glow discharge starting voltage.

**Revendications**

1. Feuille stratifiée à base d'un polymère thermoplastique, appropriée en tant que matériau électro-isolant, caractérisée en ce qu'elle comprend au moins trois couches de polymère thermoplastique, une couche de polymère intermédiaire, à conductivité électrique élevée, étant disposée entre deux couches de polymère externes non conductrices du courant électrique, laquelle possède une résistance électrique réduite, de préférence de 1 à $10^5$ ohms, par addition d'un agent augmentant la conductivité électrique, en particulier du noir de fumée, de l'aluminium ou du zinc.

2. Feuille stratifiée selon la revendication 1, caractérisée en ce que le nombre des couches de polymère va de 3 à 9, des couches de polymère à conductivité électrique élevée et des couches de polymère non conductrices du courant électrique se faisant suite en alternance, et les couches de polmère externes de la feuille stratifiée ne conduisant pas le courant électrique.

3. Feuille stratifiée selon la revendication 1 ou 2, caractérisée en ce que les couches de polymère non conductrices du courant électrique présentent une viscosité à l'état fondu comprise entre 100 et 10000 mPa·s et sont constituées de préférence de polypropylène ou de poly(téréphthalate d'éthylène).

4. Feuille stratifiée selon l'une des revendications 1 à 3, caractérisée en ce que les couches de polymère à conductivité électrique élevée présentent une viscosité à l'état fondu comprise entre 100 et 10000 mPa·s et sont constituées de préférence de polypropylène ou de poly(téréphthalate d'éthylène).

5. Feuille stratifiée selon l'une des revendications 1 à 4, caractérisée en ce que les couches de polymère à conductivité électrique élevée sont modifiées avec l'agent augmentant la conductivité électrique, en une quantité allant de 3 à 50, de préférence de 5 à 20% en poids, par rapport au poids total des couches de polymère conductrices du courant électrique.

6. Feuille stratifiée selon l'une des revendications 1 à 5, caractérisée en ce que les agents augmentant la conductivité électrique présentent des tailles de particules comprises entre 0,01 et 3, de préférence entre 0,05 et 1,0 µm.

7. Feuille stratifiée selon l'une des revendications 1 à 6, caractérisée en ce que son épaisseur totale va de 3 à 50, de préférence de 6 à 25 µm, les épaisseurs des couches de polymère à conductivité électrique élevée étant toujours inférieures aux épaisseurs des couches de polymère non conductrices du courant électrique.

8. Feuille stratifiée selon l'une des revendications 1 à 7, caractérisée en ce que les épaisseurs des couches de polymère non conductrices du courant électrique sont comprises entre 1 et 10, de préférence entre 2 et 7 µm, et les épaisseurs des couches de polymère conductrices du courant électrique sont comprises entre 0,01 et 5, de préférence entre 0,5 et 3 µm.

9. Condensateur électrique comprenant une feuille de matière plastique en tant que diélectrique, caractérisé en ce que, pour l'amélioration de la tension de seuil d'effluve, le condensateur contient en tant que feuille de matière plastique, la feuille stratifiée selon l'une des revendications 1 à 8.

FIG.1

FIG.2